(19) Europäisches Patentamt / European Patent Office / Office européen des brevets

(11) **EP 2 056 249 A1**

(12) **EUROPEAN PATENT APPLICATION**

(43) Date of publication:
**06.05.2009 Bulletin 2009/19**

(51) Int Cl.:
**G06Q 40/00** *(2006.01)*

(21) Application number: **08019107.5**

(22) Date of filing: **31.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.11.2007 US 933960**

(71) Applicant: **Creditex Group, Inc.**
**New York, NY 10022 (US)**

(72) Inventors:
• **Ellis, William Paul Basil**
  **Haslembre**
  **Surrey (GB)**
• **Rowell, Mark**
  **London, N13 4BJ (GB)**
• **Etkin, Henry**
  **New York, NY 10014 (US)**

(74) Representative: **Hertz, Oliver**
  **v. Bezold & Partner**
  **Patentanwälte**
  **Akademiestrasse 7**
  **80799 München (DE)**

(54) **Credit derivative trading platform**

(57) A credit derivative trading platform comprises a credit derivative authority configured to create contracts and allow market participants to trade credit derivative contracts in real-time. One or more credit sponsors provide credit to the market participants on the platform. One or more liquidity sponsors may provide a predetermined level of price support on the platform.

Figure 2

**Description**

**FIELD OF THE INVENTION**

The field of the invention relates generally to credit derivatives and more particularly to the transacting in credit derivatives in an online environment.

**BACKGROUND OF THE INVENTION**

Financial derivatives are contracts of which the price/value of the contract varies with the value of an underlying instrument. Financial derivatives can either be standardized contracts traded on a recognized Exchange or OTC traded. OTC derivatives are individually negotiated and tailor-made between two counterparties (so called "over the counter (OTC) transactions"). The parties do their own valuation of the contracts both when dealing as well as later on when establishing the market value of their contracts during their life.

Participants in the OTC markets are banks, investment banks and other financial institutions. The International Swap and Derivatives Association is a trade organization for dealers active in the OTC derivatives market. An OTC derivative transaction allows the financial institution to manage its market risk positions, either for the purpose of hedging or for the purpose of deliberate position taking to make a profit from an expected change in market prices. Derivatives allow the market risk of substantial amounts to change hands without the need and associated costs of transferring the underlying values.

A thorough discussion of other aspects of OTC derivatives may be found in U.S. Published Patent Application 2003-0083978 entitled "System and method of implementing massive early terminations of long term financial contracts" by Brouwer which is hereby incorporated by reference in its entirety.

**SUMMARY OF THE INVENTION**

A credit derivative trading platform comprises a credit derivative authority configured to create contracts and allow participants to trade credit derivative contracts in real-time. The platform includes credit sponsors, for example prime brokers, that act in place of an exchange as the central clearing party.

One embodiment is a credit derivative trading platform that includes a credit derivative authority that accepts orders from one or more market participants and executes trades between participants, one or more market participant systems for placing orders into the platform, and one or more credit sponsors that provide credit to the one or more market participants on the platform.

The platform may also include one or more liquidity sponsors that provide a predetermined level of price support on the platform. The credit derivative authority is configured to create one or more single name credit default contracts and one or more indices of credit default contracts.

The platform may support market orders, limit orders, market-to-limit orders, and iceberg orders. The platform may also support fill or kill, immediate or cancel and minimum volume orders. The platform may be configured to net trades between market participants.

Another embodiment is a method of transacting credit derivatives on an electronic trading platform. The method includes matching orders between a first market participant and a second market participant on the platform, executing a trade between the first market participant and the second market participant, and automatically executing an agreement between the first market participant and a first credit sponsor involving credit for the executed trade.

The method may further include executing an agreement between the second market participant and a second credit sponsor involving credit for the executed trade and executing an agreement between the second credit sponsor and the second credit sponsor involving credit for the executed trade.

Yet another embodiment is a method of creating a single name credit default swap contract on an electronic trading platform. The method includes polling one or more market participants on the platform concerning the reference obligors, choosing one or more of the polled reference obligors, and requesting that one or more market participants provide fixed coupons for each of the chosen reference obligors.

**BRIEF DESCRIPTION OF THE DRAWINGS**

Features, aspects, and embodiments of the inventions are described in conjunction with the attached drawings, in which:

Fig. 1 is a diagram illustrating an example credit derivative trading system in accordance with one embodiment of the invention.

Fig. 2 is a diagram that illustrates the different market participants that may be included on the platform.

Fig. 3 is a chart that illustrates an example of an iTraxx Europe series 5 Main index credit default swap.

Fig. 4 is chart that illustrates an example of a single name France Telecom 5Y contract.

Fig. 5 is a block diagram showing multiple trades between trading entities following an order match on the platform.

Fig. 6 is a timeline that shows the procession of the typical trading day (not to scale).

Fig. 7 is a decision tree diagram that details the different scenarios for determining an auction price on the platform.

Fig. 8 illustrates a two-fold price range check that may be performed when orders are matched in the order book on the platform.

Fig. 9 is a schematic representation of the credit derivative authority shown in Fig. 1.

Fig. 10 is a flow chart of the main algorithm loop of the optimization engine shown in Fig. 9.

Fig. 11 is a flow chart of the optimization engine shown in Fig. 9 in recursive mode.

Fig. 12 is a flow chart of the optimization engine shown in Fig. 9 with intervals and/or remainder netting.

Fig. 13 is a flow chart of the operation of the electronic netting system.

Fig. 14 is a screen shot of the raw data of original trades prior to multi-lateral netting of the selected and authorized bilateral trades;

Fig. 15 is a screen shot of the output from the credit derivative authority following aggregation and multi-lateral netting of the selected and authorized bilateral trades.

Fig. 16 is a flow chart of the operation of the electronic netting system.

## DETAILED DESCRIPTION OF THE INVENTION

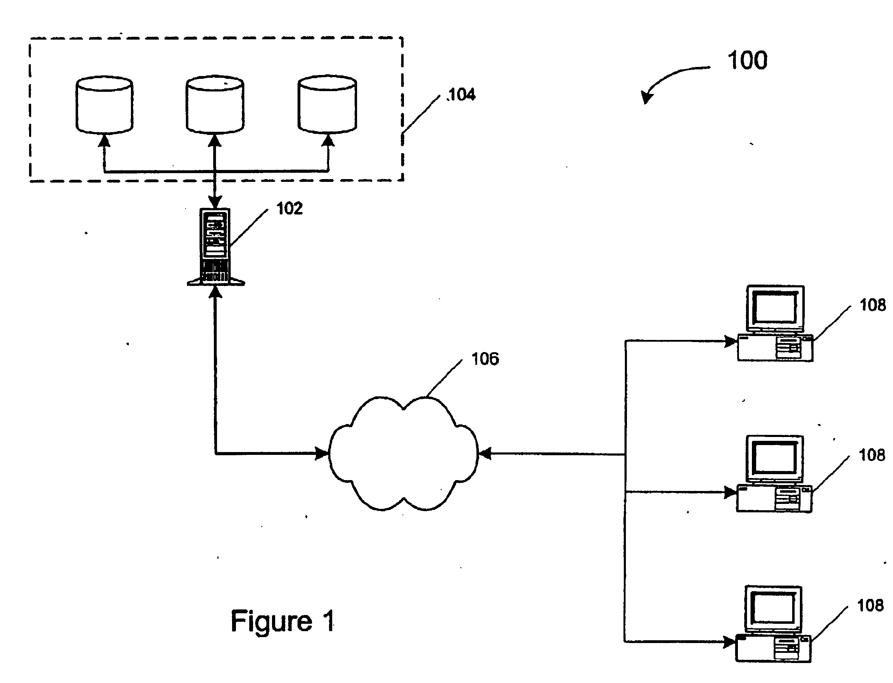

Fig. 1 is a diagram illustrating an example credit derivative trading platform 100 in accordance with one embodiment of the platforms and methods described herein. Platform 100 comprises a credit derivative authority 102 interfaced with a database 104. Database 104 can, as illustrated, actually comprise a plurality of databases depending on the embodiment. Credit derivative authority 102 is interfaced with a plurality of market participant terminals 108 through network 106.

In one embodiment, network 106 is the Internet; however, network 106 can be any type of wired or wireless Wide Area Network, wired or wireless Local Area Network, or even a wired or wireless Personal Area Network, or some combination thereof. Further, in certain embodiments credit derivative authority 102 and/or terminals 108 can be interfaced with network 106 via wired and/or wireless communication links, while in another embodiment, credit derivative authority 102 and/or terminals 108 are interfaced with network 106 via wired communication links.

In one embodiment, terminals 108 are computer terminals, such as desktop or laptop computers. In other embodiments, terminals 108 are handheld devices, such as handheld computers or personal digital assistants. It will be apparent, however, that terminals 108 can be any type of terminal configured to include the functionality required by the platforms and methods described herein.

The term "authority" used to identify credit derivative authority 102 is intended to indicate that terminals 108 communicate with credit derivative authority 102 through the computing platforms, hardware and software, associated with credit derivative authority 102. Thus, depending on the embodiment the term authority can refer to one or more servers, such as Internet or web servers, file servers, and/or database servers, one or more routers, one or more databases, one or more software applications, one or more Application Program Interfaces (APIs), or some combination thereof. Further, the computing platform associated with credit derivative authority 102 can include one or more computers or computer terminals. To that extent, some of the same components that comprise the computer platform associated with credit derivative authority 102 can also comprise terminals 108.

Platform 100 includes a standardize interface that allows the market participants to define positions with credit derivative authority 102 for any of a plurality of credit derivatives regardless of the region, industry, etc. Credit derivative authority 102 is configured to then store the positions in database 104. Using the standardized interface, credit derivative authority 102 displays information related to the positions stored in database 104 to the market participants via terminals 108. The market participants are then able to define responsive positions, indicate a willingness to transact, and/or complete a transaction using the standardized interface. Thus, credit derivative authority 102 can replace the dealer-broker paradigm of conventional credit derivative markets and provides the market participants with more outlets, greater liquidity, and more efficiency, all of which can help to lower transactional costs.

The standardized interface can comprise software components configured to run on credit derivative authority 102 as well as client software components configured to run on terminals 108. Thus, credit derivative authority 102 can work in conjunction with the client software running on terminals 108 to format and display information to the market participants in a uniform manner and to receive input from the market participants through terminals 108 in a manner that allows quick, easy, and efficient transactions. Certain features and aspects of the standardized interface are discussed more fully below.

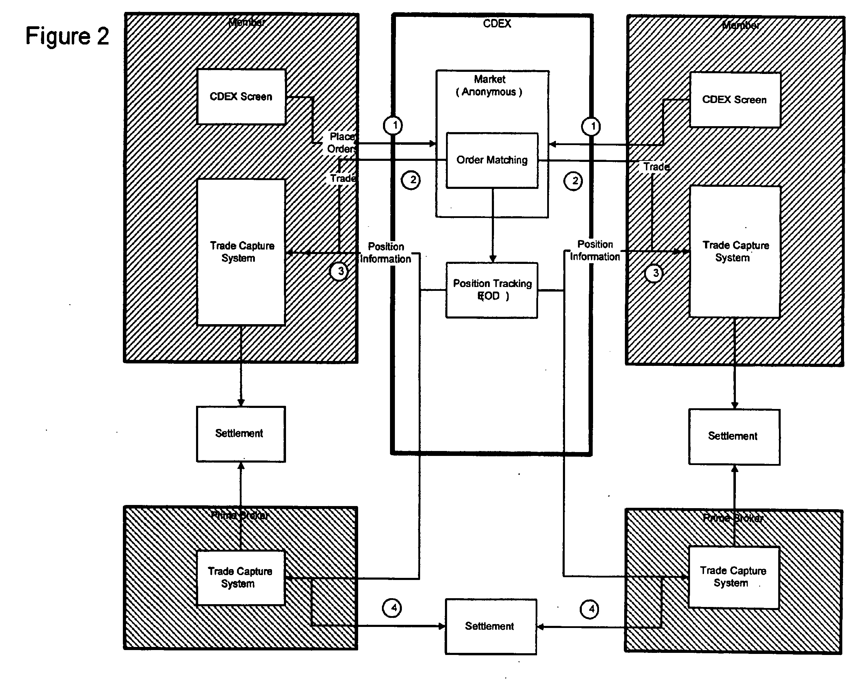

Fig. 2 illustrates the different market participants that may be included on the platform. As shown in Fig. 2 each trading member is associated with a prime broker that acts as a credit sponsor for the member. The credit derivative authority labelled CDEX in the figure acts as an intermediary for the participants. The primer brokers are used in place of an exchange as the central clearing counterparty. Following is a description of entities that may be included in the system shown in Fig. 2.

Associate-An Associate is a member that permits individuals to act on their behalf to place orders and execute transactions on the platform. An associate and its traders may be enabled to trade particular contracts and disabled from trading others. Further, for certain contracts, ordinary associates can only trade market and market-to-limit orders.

Liquidity Sponsors-Liquidity sponsors are members that guarantee to provide a certain level of price support. For example, they may provide quotes for a certain amount of time during the trading period, typically 95% of the trading period with a minimum size equivalent to 25mm EUR. Quotes may be provided on a "rolling" basis i.e. the size of the quotes is continuously refreshed to a pre-determined size, as the orders that comprise a quote are matched throughout the trading period.

Quotes may adhere to a maximum bid/offer spread for the contract -- the bid-offer spread of a quote, for example, must be less than or equal to this maximum value. This maximum bid-offer spread may depend on the liquidity of the contract, and can be defined as a multiple of the tick-size of each contract. Quotes may stay in the order book for a specified minimum time once entered.

In return for providing this price support, sponsors may receive certain benefits not open to standard trading participants of the platform. These benefits may include: trading fee rebate based on exceeding quote provision targets; priority during the order book balancing phase of auctions; and access to all order types and order execution styles.

Credit Sponsors-Credit sponsors act as providers of credit to the liquidity-sponsors and associates on the platform. The credit sponsors act as the central clearing counterparty on the platform in place of a typical exchange. In return, they may receive, for example a fee per transaction, as agreed with the liquidity-sponsors and associates. All trading entities on the platform (associates and liquidity-sponsors) preferably have one or more credit-sponsors assigned to them. A trading entity however may be its own credit-sponsor, subject to certain requirements being met.

A typical credit-sponsor on the platform may be a prime broker for one or more trading entities. Prime brokers may not trade on the platform. Instead, they act as central counterparties for one or more trading entities of the platform. Every trading participant institution preferably has a nominated credit sponsor. Provided that it fulfills the criteria, a liquidity-sponsor or associate can act as its own credit-sponsor, but the two roles are distinct.

## Contracts

The platform can support the trading of a variety of different contracts, including the index credit default swaps and single name contracts. This section describes the operations that take place on CDEX when: new series of an index family are created; and single name contracts are "rolled" to the next 5y maturity date.

Index Credit Default Swap-

## Rolls

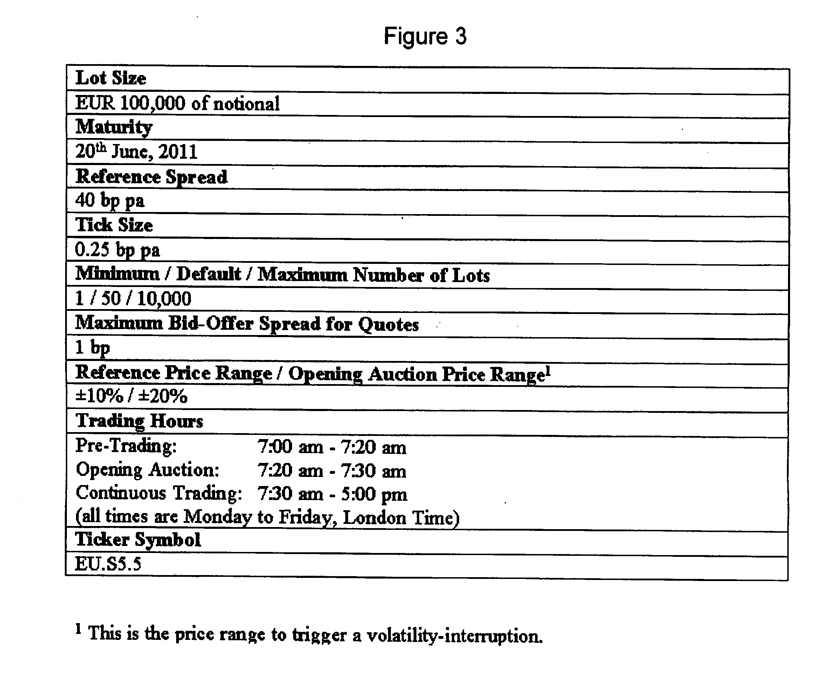

Indices-Fig. 3 illustrates an example of an iTraxx Europe series 5 Main index credit default swap. Once the new iTraxx index series is announced, contracts are created for the new index series (but not made available for trading). The day that trading commences in the new index series, the previous old index series contracts are made unavailable for trading. For example, currently, iTraxx Europe series 4 and 5 would be the actively traded contracts on the platform. On or about the 20th September 2006, iTraxx Europe series 6 will be created. At this point, the iTraxx series 4 contracts will be made unavailable for trading and the new series 6 contracts will be created.

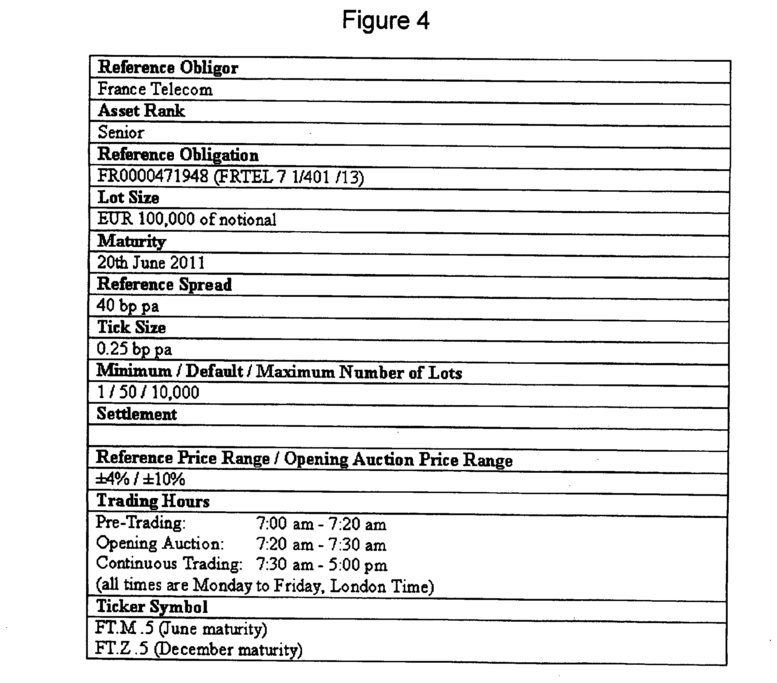

Single name contracts-Fig. 4 is an example of a single name France Telecom 5Y contract.

For single name contracts on a particular reference obligor, a new contract may be created on the platform on each 20th of March and September for maturity in five years and three months, corresponding with the European index "rolls". For example, on the 20th September 2006, new five year single name CDS contracts may be created with a final maturity of 20th December 2011. The current five year contract maturity date is 20th June 2011.

Reference Obligor Selection for Single Name Contracts-In this section the procedure for the selection of which single name contracts are traded on the platform is described.

At the point of the roll of the iTraxx Europe main index, once the new constituents are known, the liquidity sponsors of the platform are polled for their selection of 25 reference obligors from the new constituents. From the union of the set of names provided by all market-sponsors, the platform administrators may pick, for example, the 25 most frequent obligors. From this set of 25 names, 25 new single name contracts can be created. Once the set of 25 names are known, the liquidity sponsors are informed and asked to provide fixed coupons for each name. The selection of single name contracts may be updated prior to the index roll when the new index constituents are known.

Credit Event Determination-During any trading day, it may be apparent that a particular reference obligor may have triggered a credit event. If this is the case, trading in the index of which it is a member may be suspended, and the credit-sponsors of the platform are polled to determine whether a credit-event has actually taken place. By simple majority rule from the credit-sponsors responses, the platform administrators can then: Suspend trading in the affected index / single name contract; cancel all outstanding orders in the affected contract; at some point later initiate an auction in the index of which the affected entity is a member. Additionally, all participants (trading and non-trading) of the platform may be sent a notification via the platform.

Loss given default- Loss given default (LGD) is defined as the amount that the protection seller in a credit default swap contract has to pay the protection buyer for cash settlement of a credit event. It is given by

$$LGD = (1-R)N$$

Where R is the recovery rate on the selected reference obligation and $N$ is the notional of the original trade between the counterparties. The recovery rate in cash settled transaction is equivalent to the price (normalised to 1 unit of currency) of the defaulted reference obligation.

Trading of loss given default may occur when the platform administrators have determined that a credit event has occurred. Any positions in affected contracts (either index related where the defaulted entity is a member of the index or a single name contract on the defaulted entity) switch to loss given default contracts. Trading entities that have positions in these loss given default contracts can place orders where the price of the order is the price (Recovery Rate) they wish to pay/receive for the reference obligation for the defaulted entity. These contracts are a way of cash-settling credit default swaps using the platform as an open market place to determine the effective price of the reference obligation.

For Index CDS Transactions Index credit default swap transactions are equivalent to a portfolio of single name CDS transactions, where the notional amount of each single name is the product of the weighting of each reference entity within the index multiplied by the notional of the index CDS transaction. For example, for the iTraxx S5 Europe Main index, each reference entity has a weighting of 1/125 (as there are 125 names in the index), hence the effective notional for each single name is $N$/125 (where $N$ is the notional of the index transaction). Hence for an iTraxx S5 Europe main transaction with a notional of 125mm EUR, a single credit event would reduce the notional of the transaction to 124mm EUR, with the LGD being calculated on a notional of 1mm.

Successor Event Determination-Once a successor event has been determined, platform administrators may suspend trading in the affected index / single name contract; cancel all outstanding orders in the affected contract; at some point later initiate an auction in the index of which the affected entity is a member. In the case where the affected entity trades on a single name basis on the platform, contracts for the old entity may be invalidated for trading and the platform administrators may either: create a contract (or contracts) for the new entity if it is not traded currently, or perform a coupon reset. Trading then may be re-enabled for the affected entities where appropriate.

Coupon Reset for Single Name CDS-The procedure for fixing the coupon on a single name credit default swap contract may follow the process utilised by the iTraxx Europe indices. This procedure is as follows: Three business days before a new set of single name contracts are created, the platform administrators may poll all liquidity sponsors for their proposals for the fixed coupons for each new single name contract. The liquidity sponsors have to respond within 24 hours. When the platform administrators receive the proposals from the liquidity sponsors, the values may be rounded to the nearest 5 basis points. The final value for the fixed coupon for a single name contract is the majority value (mode) of the responses received from the liquidity sponsors.

Market to Market Adjustment-From time to time, the platform administrators may decide to reset the fixed coupon on one or more single name contracts, between roll dates. One reason for this would be that the current trading level (reference price) for a particular single name contract is outside some pre-specified bounds of the fixed coupon amount. Should this be the case, the platform administrators may perform the following tasks: 1) Notify all market participants of the impending coupon adjustment; cancel all outstanding orders/quotes; 2) poll liquidity sponsors for the new fixed coupon; create contracts with the new fixed coupon; 3) calculate the market to market adjustment required by the change in fixed coupon from the previous fixed coupon to the new fixed coupon (this calculation may be based on the net position in the contract that each member has with its credit-sponsors and the difference in spread between the new and old fixed coupons); and 4) send notification of the market to market adjustment to all participants - the market to market adjustment amount may be netted with all upfront payments made during the trading day that the coupon reset occurs.

### Transactions

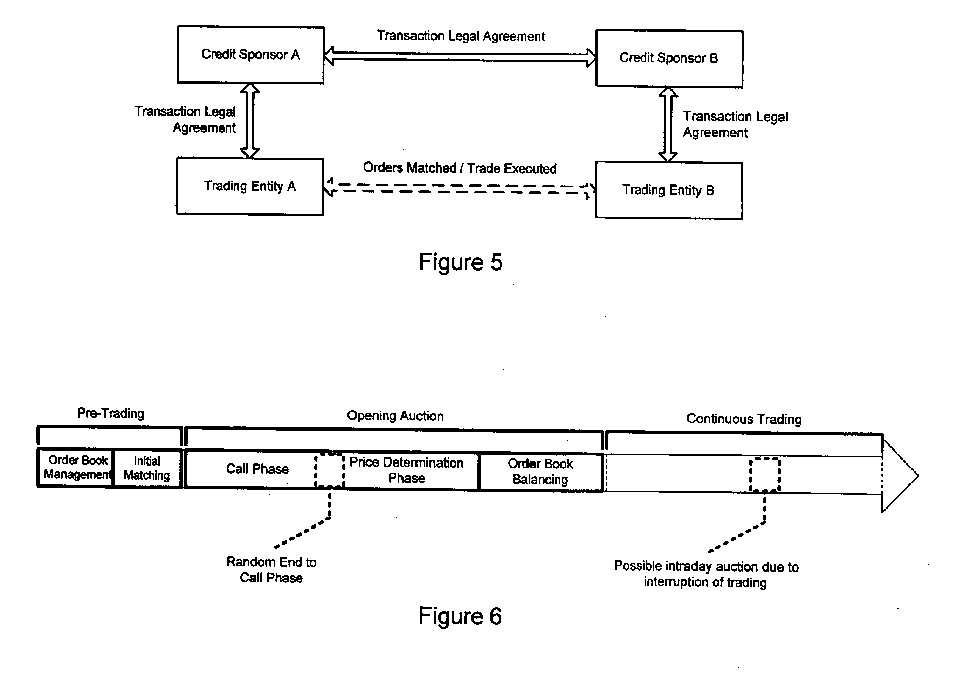

When two trading-entities have an order matched during auctions and continuous-trading to execute a trade, the platform may actually create multiple trades between the trading-entities, their credit-sponsors and the credit-sponsors. Fig. 5 is a block diagram showing the multiple trades between trading entities following an order match on the platform.

### Order Types

This section describes the types of orders that can be entered into the platform. All trading entities on the platform are able to enter orders into the order-book subject to them being enabled to transact the contract in question. A change to an order already in the order book may result in a new time being associated with the order, if: the limit is changed, or the number of lots is increased. If, however, the number of lots is *decreased* the order may retain its timestamp and hence its priority. Consequently, every time an order is given a new time, it may be assigned a new unique order number.

Market Order-A market order is one that is to be executed as the next price determined by the platform, whether this is determined by auction or at the reference price or best opposite limit in the order book. A market order is traded at the last available traded price (reference price) for the given contract if it comes up against only market orders on the other side of the order book. If no reference price is available then the order may remain in the order book for later execution.

Limit Order-A limit order is an order that is to be executed at the specified limit (price) or better. i.e., for a bid the order will be executed at the specified limit or higher, and conversely for an offer order.

Market-to-Limit Order-Market-to-limit orders are orders that offer increased likelihood of execution, but with the security afforded limit orders. In continuous trading, market-to-limit orders may be executed against the best limit available in the order book (this may of course be the current reference price). If this type of order cannot be executed in full at the point of entry, a new limit order may be entered into the order book with the limit set to the price at which the executed portion was traded. This new limit order may be automatically assigned the timestamp of the first executed part.

During auctions market-to-limit orders may be treated in the same manner as market orders for the purposes of price determination. After the price determination phase of an auction, a market-to-limit order may be executed at the resultant auction price (if one was determined). If the entire order could not be filled, any remainder may be offered (as a market order) to the rest of the market during an order book balancing phase. Subsequent to the balancing phase (at the start of the continuous trading period), two things can happen: 1) if the original order was specified for the auction only, the remaining portion of the order may be automatically cancelled, or 2) it may have its limit set to the resulting auction price and will be placed in the order book as a limit order ready for the continuous trading phase.

Iceberg Orders-An iceberg order allows an entity, during continuous trading, to hide the total number of lots in their order. Iceberg orders are characterized by: 1) a limit, 2) a total volume, and 3) a peak.

The peak is the part of the order that is shown to the market. As soon as the peak is executed, a new order may be created with the same peak and a new timestamp. This process continues until the total volume is exhausted - the ultimate peak amount may be less than the original peak value of course. As each new peak order is created they have the same time expiry as the original order. In some embodiments, iceberg orders may not be combined with additional trading restrictions (such as fill or kill and immediate-or-cancel). Any increase in peak size or total volume may give the order a new order number and timestamp.

If an iceberg order is valid for an auction, the total volume is what is shown in the depth. If any volume remains after the auction has completed (including the order book balancing phase) a new order with a size equal to the remaining volume of the original order may be passed into the order book for the continuous trading period.

Quotes-Quotes are the simultaneous entry of a bid and offer limit order by a platform sponsor. The lot sizes of the bid and offer orders can be different. The orders comprising a quote must have the standard execution type.

### The Trading Day

The trading day for the platform can run for any predetermined period. The trading day may include three periods: 1) pre-trading, 2) opening auction, and 3) continuous trading, and closing auction. At any point during the trading day, the platform administrators may have the ability to send system announcements and alerts. Possible uses of this are to announce auctions and/or an interruption of trading. Fig. 6 shows the procession of the typical trading day (not to scale).

Pre-Trading-The pre-trading period can begin at, for example, 7:00 am London time. It allows market participants to prepare for the opening auction by entering quotes and orders and performing general management of their orders. However, during this period, no inside-market or depth may be made available - participants may only see their orders.

Opening Auction-After the pre-trading period is over, the opening auction starts. The details of the auction process are described below.

Continuous Trading-Once the opening auction is finished and a reference price is determined (if possible), the main trading period can commence. The main trading period may be one of "continuous-trading," with possible intraday auctions to handle volatility-interruptions, or other events where continuous-trading is temporarily halted by the platform administrators. The details of how orders are matched and execution prices are determined are described in § [0069].

Closing Auction-At the end of continuous trading, for example at 5pm London time, a closing auction may be held. The auction protocol may be similar to that for the opening and intraday auctions. The closing auction may be used to set the official closing price on all traded contracts.

## **Trading Protocols**

Auctions-The platform may support opening auctions for index credit default swaps. For less-liquid single name credit default swaps, the platform may support intra-day auctions as well.

If at the end of the auction call-phase there is a surplus of market orders the call-phase may be extended to increase the probability of these market orders being executed at the end of the auction. Trading may be preceded by an opening auction. At the start of the opening auction any orders in the order book placed there during the pre-trading phase are matched (this is "uncrossing" the order book) and trades are executed. This matching process sets the reference price for the contract. The procedure may be as described for the price determination phase described herein.

The Call-Phase-Once the initial matching has been performed the call-phase may start. During the call-phase the order book may be open and participants can add, modify and cancel orders. Also, during this time if there are orders that can be matched an indicative auction price may be made available to participants. If this is not the case (the order book is not crossed) the best bid and offer are made available. Additionally participants have access to the full depth information. The length of the call-phase may be random with a set minimum value - using a random end point helps to counter market manipulation.

Price Determination Phase-Once the call-phase has terminated, the price determination phase may occur. In this phase, the auction price may be determined on the basis of executing as much volume as possible leaving the smallest possible surplus of orders for each limit in the order book. The exact procedure is described below.

If no bids and offers can be matched (the order book is not crossed at the end of the call-phase) then the auction price may not be determined. In this case the best bid and offer may be made available to participants. As soon as the auction price is determined participants receive confirmation of the trades (if any) they have executed.

The auction price may be determined using the following rules:

- The auction price may be the limit at which the largest total lot size of orders can be executed.
- If more than one limit has the same total lot size, the limit with the smallest surplus may be the limit which determines the auction price.
- If more than one limit has the same total lot size and smallest surplus, the surplus at each of these limits is used to determine the auction price:

  o If the surplus is on the bid side for all limits (with the same total lot size), this is termed a "demand surplus", and the auction price is fixed at the highest limit
  o If the surplus is on the offer side for all limits (with the same total lot size), this is termed a "supply surplus", and the auction price may be fixed at the lowest limit

- If however the surplus is split between buy and sell sides (of course the amount of surplus lots will be the same on both sides), or there is not surplus at any of the limits with the same total lot size, then the reference price (last trade price) may be used as an additional criteria.
- If this is the case and there is excess supply and demand then the highest bid and lowest offer (amongst the limits with the same total lot size and surplus) are compared to the current reference price thus:

  o If the reference price is equal or greater than the highest limit, the auction price may be fixed at this limit
  o If the reference price is equal to or lower than the lowest limit, the auction price may be fixed at this limit
  o If the reference price is between the lowest and highest limit, the auction price may be set to the reference price.

- If only market orders can be matched and executed, they are executed at the reference price.
- If no orders can be matched, or an auction price cannot be determined the best bid and/or offer limits are made available to entities.
- If one side of the order book contains multiple orders at the indicative auction price, time priority decides which of the multiple orders gets executed in full.

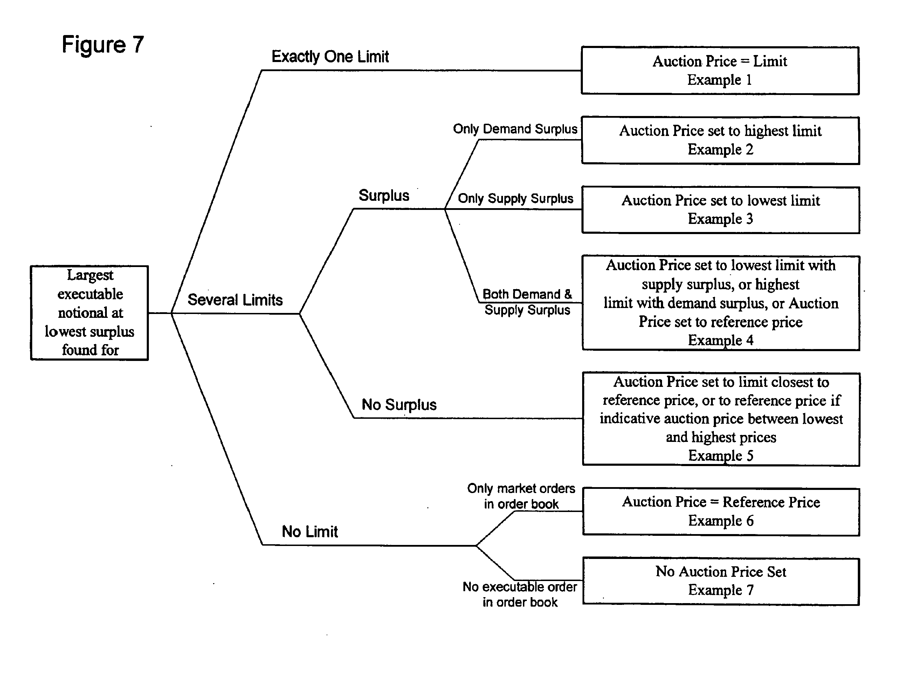

Fig. 7 is figure of a decision tree that details the different scenarios.

If there are market orders in the order book during the auction process they effectively have the best price possible i.e. bid market orders have an implied limit of infinity and sell market orders have an implied limit of 0. This way all market orders may contribute to maximizing the execution volume.

### Order Book Balancing

If it is impossible to execute all orders in the price determination phase, the surplus (which must be on one side of the market or other) may be offered out to the market. Initially, liquidity-sponsors may be invited to accept surplus orders (either wholly or in part) at the reference price determined at the end of the price determination phase. After this initial balancing period, any remaining surplus may be offered out to the ordinary trading entities in the given contract.

Preferably, during the order book balancing phase, orders previously entered into the system cannot be altered or cancelled.

After this phase, if any further surplus remains, any orders that have not been executed (either in whole or part) are carried forward into the continuous trading phase, if they have been marked as applicable for continuous trading by their owners.

### Continuous Trading

During a continuous trading phase, each new order arriving in the order book may be immediately checked whether it is executable against orders on the other side of the order book. Once entered into the order book, orders can be executed according to price and time priority. Orders may be executed in full, or in part, in one or more steps (generating one or more transactions in the process) or not all. This may depend on the execution conditions of the order.

Any orders or parts of orders that are not executed immediately may remain in the order book and sorted according to order type (market or limit), price and time priority, in readiness for the next arriving order.

Example rules that govern which price orders are executed at are as described in the following Table 1 (where RP is the current reference price and L is the limit level of the incoming order, if applicable):

**Table 1**

| Incoming Order | Order Book Contains | Price Determination Rule |
|---|---|---|
| Market order | Market orders only | Execution price = reference price |
| Limit order | Market orders only | If incoming order is a bid then<br>Execution price = Minimum(RP, L)<br>Else, Execution price = Maximum(RP,L)<br>The current reference price is considered when determining the traded price (which will become the new reference price) to reduce volatility |
| Market order | Limit orders only | If the incoming order is a bid order then the execution price is set to the best (lowest) offer limit already in the order book<br>Execution price = Minimum(offer limit)<br>Conversely, if the incoming order is an offer order then the execution price is set to the best (highest) bid limit already in the order book<br>Execution price = Maximum(bid limit) |
| Limit order | Limit orders only | If the incoming order causes the order book to be crossed and if the arriving order is a bid the execution price is set to the best (lowest) offer limit already in the order book<br>Execution price = Minimum(offer limit)<br>If the incoming order is an offer (and the order book is crossed) then the execution price is set to the best (highest) bid limit already in the order book<br>Execution price = Maximum(bid limit)<br>If, however the order book is not crossed with the arrival of the new order then no trade is executed. |

(continued)

| Incoming Order | Order Book Contains | Price Determination Rule |
|---|---|---|
| Market order | Mixture of order types | If incoming order is a bid then execution price is set to<br>Execution price = Minimum(RP, best offer)<br>Otherwise the execution price is set to<br>Execution price = Maximum(RP, best bid) |
| Limit order | Mixture of order types | As market orders take priority over limit orders, any market orders already in the order book are executed first against the incoming limit order, but the best existing limit order is used in execution price determination. The general principal is that the execution price is set to the best available execution price for the incoming order. For example, if the incoming order is a bid the execution price is<br>Execution price = Minimum(RP, L, Best offer)<br>And if the incoming order is an offer the execution price is<br>Execution price = Maximum(RP, L, Best bid)<br>This works if the incoming order would cause the market to be crossed or not. |

Hence, Table 1 shows that limit orders may be executed at their limit level or better (e.g. the same or lower than the limit for a bid, and vice versa for an offer).

If the order book contains no other orders when a new order arrives, nothing is executed. An incoming market-to-limit order is rejected unless the other side of the order book contains limit orders only. If this is the case, the execution price is set to the best price on the opposite side (from the incoming order direction) of the order book.

The inside-market and depth information (all be it with orders with the same limit aggregated) are preferably available to all market entities.

## General

In this section, various properties of the platform (that apply to all types of trading periods) are described.

Anonymity-Preferably, trading is anonymous. Market participants cannot identify which participant entered a quote or an order. Due to the use of credit-sponsors as central counterparties, the anonymity may extend to the post-trade functions of the platform.

Impersonation-Traders preferably may enter quotes and orders and manage them on behalf of another trader in the same organisational group.

Self Trading-Orders from traders at the same institution preferably are not be matched together during price determination.

Events Affecting Prices-The platform may suspend trading in the event of extraordinary events affecting pricing of the contracts in question. Orders existing in the system may be deleted.

Execution Confirmation-When a pair of orders have been matched (in part or whole) both counterparties are immediately sent an execution confirmation detailing: the original order; the contract; the price at which it traded; and the number of lots. At some point after this an official position alteration confirmation is sent to both counterparties

Volatility Interruptions-To prevent jumps in the reference (last traded) price of a contract the platform can utilize a "volatility interruption" at any point during the trading day (whether during the opening auction or the main continuous trading phase). A volatility interruption occurs when a contract would be executed outside of some well defined price bounds when orders are matched in the order book.

## The Order Book

All orders and quotes for a particular contract may be entered into a central order book. When they are placed into the order book they may be sorted by: Price - higher bids/lower offers take priority, and Tiome- earlier times take precedence.

Preferably, quotes provided by liquidity sponsors receive no special consideration.

Orders and quotes at a given premium level may be aggregated. The total number of orders and quotes making this total may not be provided to the entities. Participants only see the specific details of their own orders.

For all contracts the best bid and offer prices as well as the aggregated lot sizes, and the depth may be updated in real-time.

## Order Validity Types

Quotes and orders in the platform may be cancelled by the exchange each night at the close of the trading day. To this end, order validity periods are less than 1 day.

Good for Time-An order flagged with this validity type is good for the specified time period unless cancelled by the entity. Good for times may include, for example, 5 minutes, 15 minutes, 30 minutes, 1 hour, 2 hours, and 5 hours.

Good for Day-If an order is flagged with this property then the order is "live" until the close of business on the current trading day.

## Order Trading Restrictions

Orders are automatically applicable to all trading periods. However, an order can be marked as with the following restrictions if required:

Opening auction only - The order is only applicable to the opening auction.

Auction only - The order is only applicable to auctions only (this will be for designated auction contracts).

Order book balancing phase - This special restriction may be applied to orders to "accept surplus" volume during the order book balancing phase. Orders of this type may be entered with the execution types 'Fill or Kill' or 'Immediate or Cancel'.

## Execution Types

Standard-This type of order may be executed immediately and in full or as fully as possible when it is placed in the order book. Any non-executed parts are left in the order book as a new order subject to the original order validity constraints, until the entire order is filled. This execution type may be the only one valid for quotes entered by liquidity-sponsors.

Fill or Kill-A fill-or-kill order is executed immediately and in full when it is placed in the order book if at all possible. If this is not possible, the entire order is deleted.

Immediate or Cancel-An immediate-or-cancel (IOC) order is one that is executed immediately and in full, or as fully as possible. Non-executed parts are deleted from the order book.

Minimum Volume-A minimum volume order is one for which the order stays in the order book until the specified minimum size has been executed. Once this has been achieved the remaining part of the order is deleted.

## Order Properties

Number of Lots-Each contract has a separate minimum (usually 1), incremental (usually 1), maximum and default number of lots. The lot size for a contract may be, for example, EUR 100,000, but this figure is contract specific.

Orders entered into the platform preferably have a whole number of lots, and this must be within the minimum and maximum bounds. Any orders entered into the platform that do not follow these rules may be rejected.

Price-the price is the the premium in basis points per annum of an order or trade. The reference price is the price of the last trade for a given contract. Price tick size is contract dependent. Typically for indices it is 0.25bp pa. Quotes or limit orders with prices that are not an integer multiple of the tick-size may be rejected.

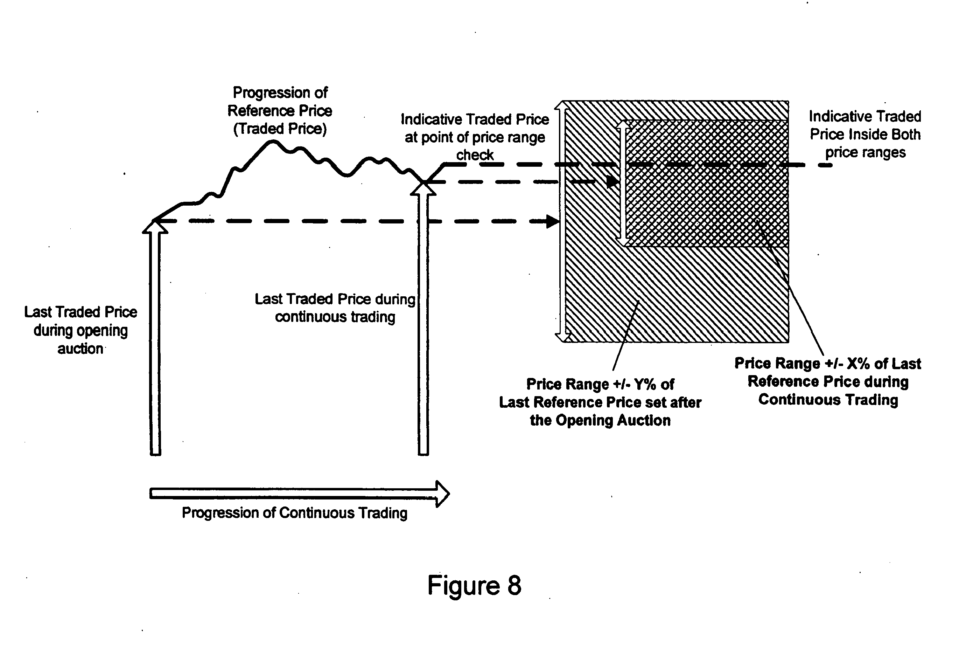

Price Ranges-Fig. 8 illustrates a two-fold price range check that may be performed when orders are matched in the order book. This price range check is used to protect the market in a particular contract from large price swings. The first price range is based on a ± percentage range either side of the current reference (last trade) price. If the orders being matched in the order book would result in an execution price outside this range a volatility-interruption occurs. An additional way for a volatility interruption to be initiated would be if the order matching would cause the reference price to fall outside a lager ± percentage range of the reference price last set at the opening auction. The percentage values for these two price ranges are contract dependent.

The platform administrators can potentially alter the price range parameters for one or more contracts intraday, depending on market conditions.

## Accounts

Associates and market-makers/sponsors can place orders into the order-book using a number of different identifiers or accounts. This then lets the entity have multiple positions in each contract, one position for each of their accounts.

**Netting**

The platform may also support the netting of trades between counterparties. As can be appreciated, offsetting bi-lateral trades between just two counterparties is a simple process. However, offsetting or netting trades between a plurality of individual, segregated counterparties to provide for multi-lateral netting is more complex.

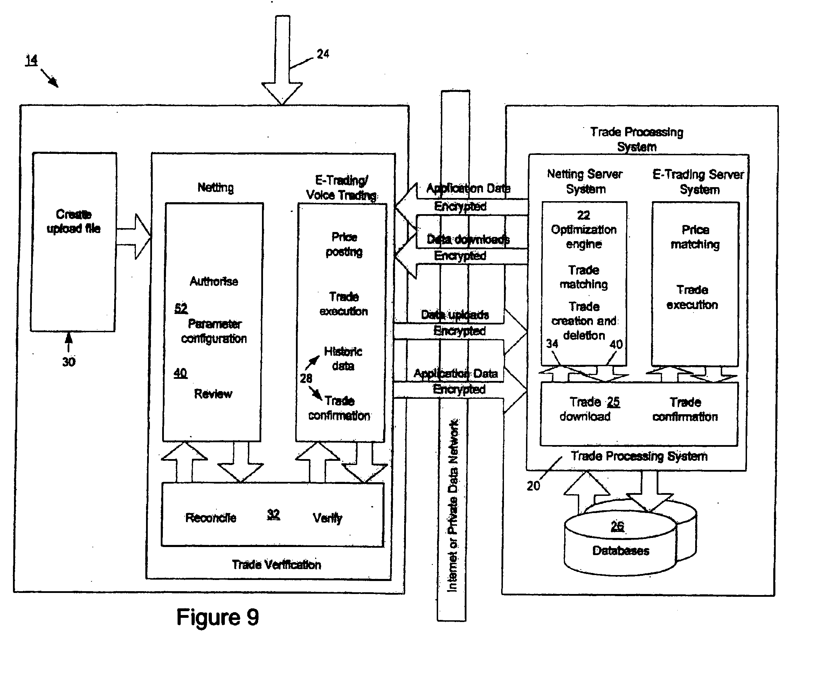

Turning now to Fig. 9, there is shown a schematic representation of the credit derivative authority 102 shown in Fig. 1. In an embodiment, the credit derivative authority 102 includes a trade processing system 20 and a netting system 22 in communication with the trade processing system 20 for providing for the optimized, multi-lateral netting of selected and authorized bilateral trades. The trade processing system 20 includes an input 24 of the bilateral trades, a database 26 for storing the input 24, and an output 25 of the completed trades. The input 24 may include identification of the parties, the instrument, the price, the size, and the fee. The input 24 may further include additional trade details such as trade date, effective date, asset rank, documentation, maturity date, currency, reference obligation, day count method, date convention, payment period, and calendar region.

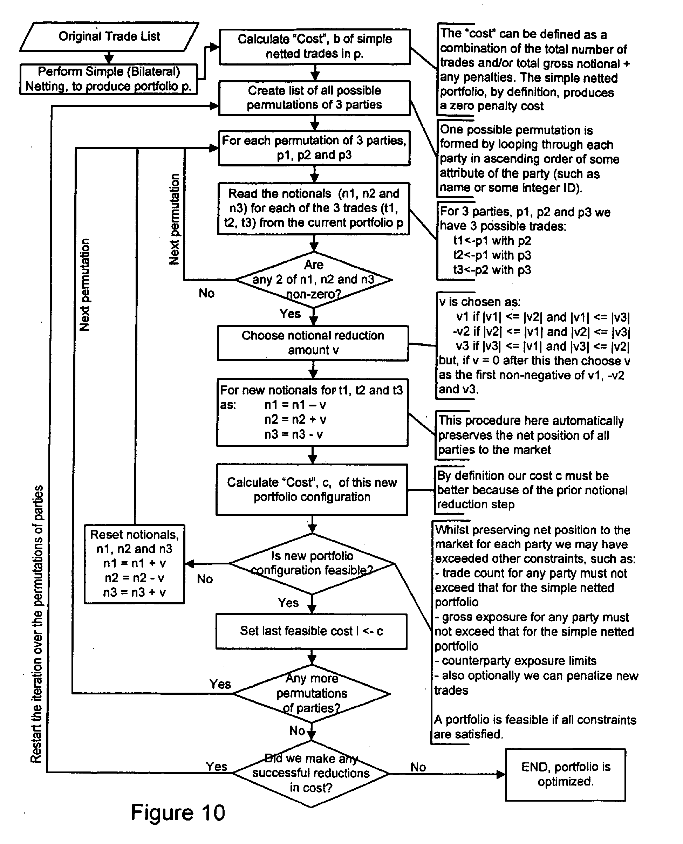

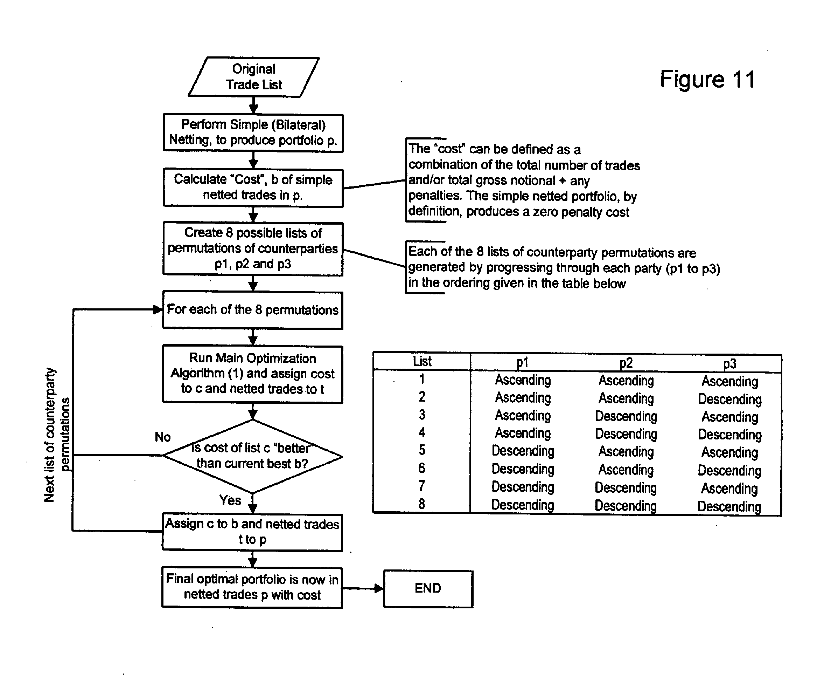

Turning to Fig. 10, there is shown a flow chart of the main algorithm loop of the optimization engine of the credit derivative authority shown in Fig. 9. In the preferred embodiment, the optimization engine receives a plurality of inputs of trades and provides an output netted trades after optimization. A flow chart of the optimization shown in Fig. 9 is shown in Fig. 11. The application of the algorithm is recursive.

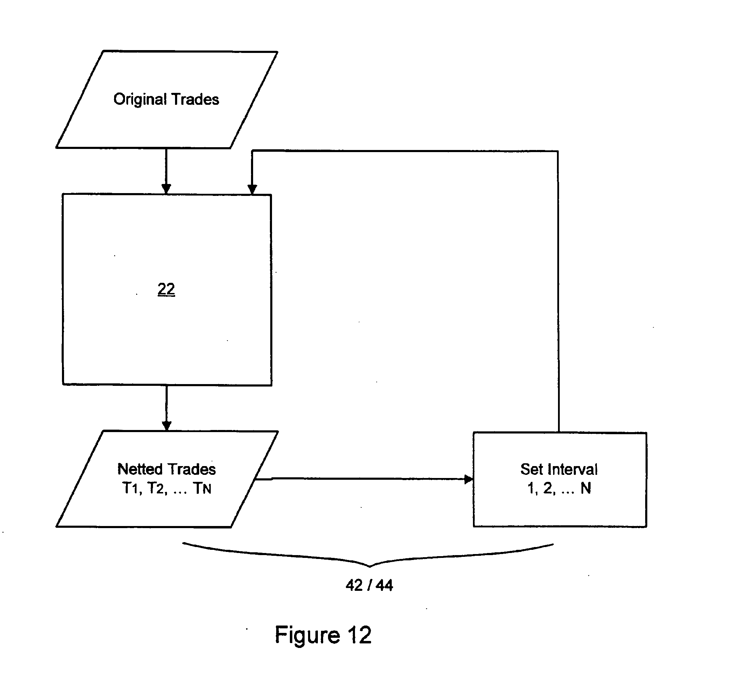

As seen in Fig. 12, the recursive optimization engine is typically run using a first netting interval, such as the end of the day. However, the recursive optimization engine may further include at least one subsequent netting interval for netting the remainder of unnetted trades from the preceding netting interval. As can be appreciated, these netting intervals may be weekly or monthly, depending on the assets being traded.

The netting system 22 may further include an input of additional netting parameters 52, such as having at least one counterparty trading limit. In addition, the output of netted trades 40 may further include a payment output 46. The payment output 46 may be netted or they may be collected by a central party. Finally, the netting system 22 may also further include a reconciliation output 50 of the output of netted trades 40.

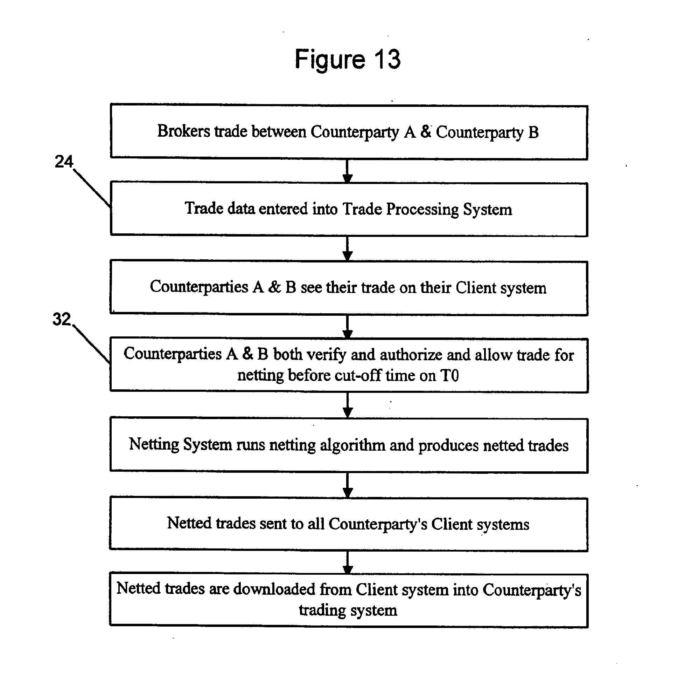

Turning to Fig. 13, there is shown a flow chart of the operation of the electronic netting system. In operation, the brokers first trade between counterparties, this trade may occur on credit derivative authority 102. Trade data is then entered into credit derivative authority 102. The counterparties may view their trade and both counterparties may verify 32 and allow the trade for netting before the end of the pre-selected trading interval. The netting system 22 runs the recursive optimization engine and provides the optimized multi-lateral netting of the selected and authorized bilateral trades and outputs these trades 40. The output netted trades 40 are sent to each of the counterparties are then downloaded from the electronic netting system 22 into each counterparty's trading system.

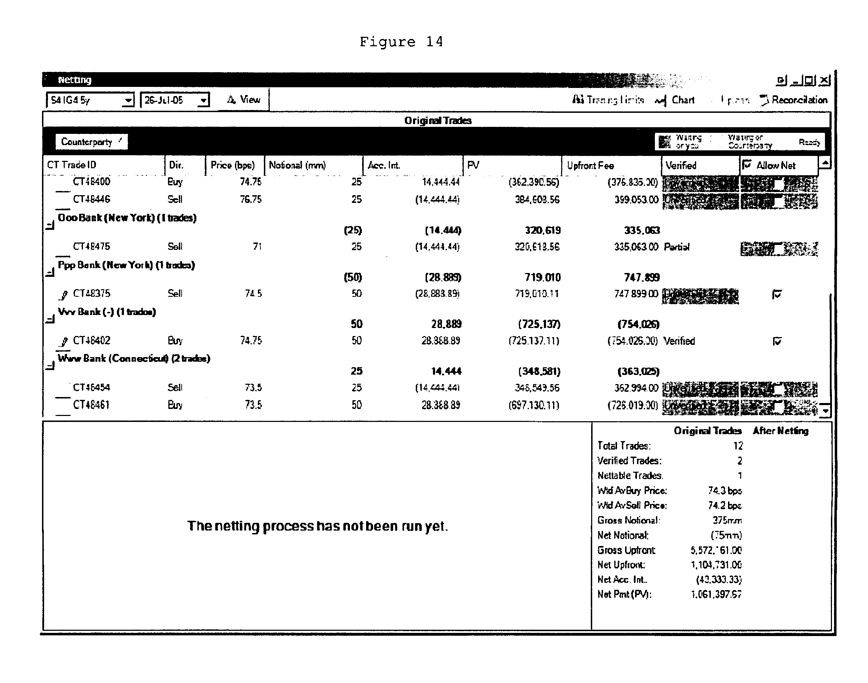

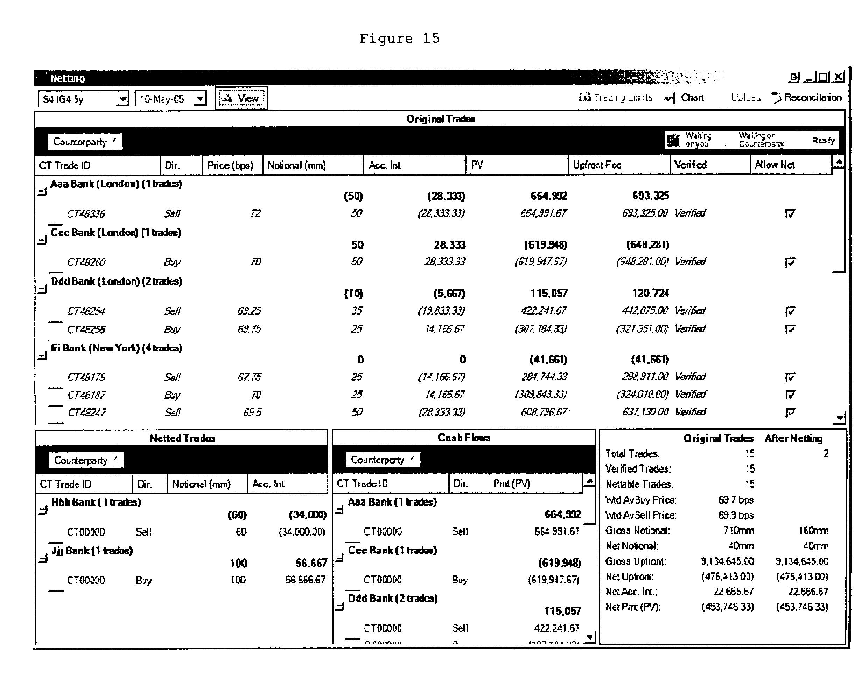

A screen shot of the raw data of the original trades prior to multi-lateral netting of the selected and authorized bilateral trades is shown in Fig. 14. Counterparties may verify 32 and authorize trades for netting. A screen shot of the output from the credit derivative authority 102 following aggregation and multi-lateral netting of the selected and authorized bilateral trades is shown in Fig. 15. Counterparties may view the output of netted trades 40, payments 46, and view a reconciliation 50.

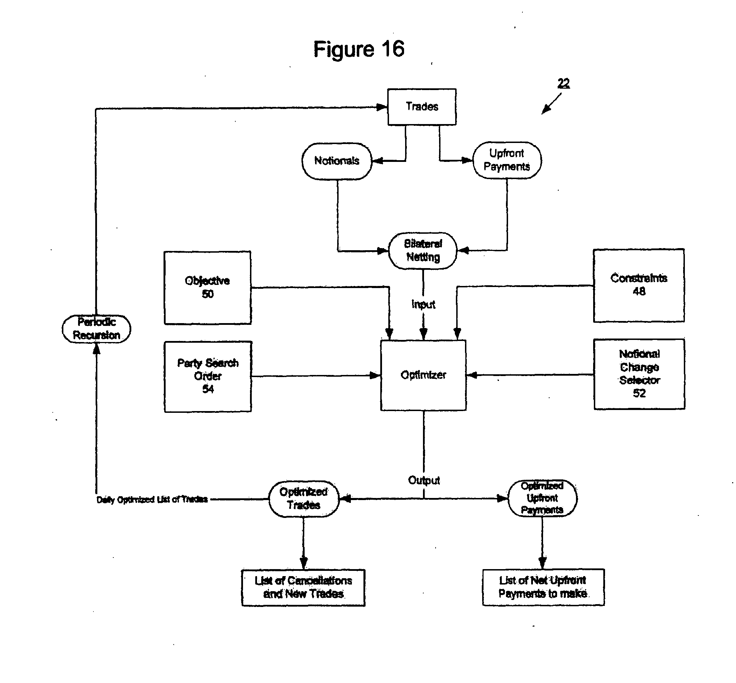

Fig. 16 shows both the daily and recursive application of the optimization algorithm. The netting system 22 of the present invention which can be used for apportioning the accumulated trade values among the counterparties according to predetermined netting parameters including a weighted distribution. The netting system 22 also allows for the generation of a diversified portfolio of counterparty credit risk. The netting system may include an input of trades, a recursive optimization engine, and an output of netted trades. The netting system may also include an input of additional netting parameters such as at least one counterparty trading limit. The additional netting parameters may include netting constraints. Multiple netting constraints 48 are allowed. Possible netting constraints include: limiting the total gross notional of each party, limiting the number of trades for each party, limiting the size of any one notional, and combinations thereof. The additional netting parameters may also include netting objectives. Possible netting objectives 50 include: total gross notionals, number of trades, variance of the notionals, counterparty credit risk profiles, and combinations thereof. The netting system may include an input of additional algorithm parameters. The algorithm parameters may include a notional change selector 52 or a party search order 54.

In one embodiment, the new process is performed as follows: the optimization process is run as described above, and then at the end of some period of time, such as one week, the system takes the last 7 days worth of optimized trades and combines the trades using bilateral netting. Next, the system runs the optimization algorithm using multi-direction search as described above and best seen in Fig. 10, with the following changes: the choice of value to change the notionals of the 3 trades at each step is now given by $d = (n_1 - n_2 + n_3) / 3$, where this value is rounded to the closest million. However, another value may be used. Additionally, the objective function is taken as the variance of the notionals (taking account of the direction e.g. we allow for positive and negative notionals) in the positions. At the end of the recursive optimization procedure, the resulting optimized trades replace whatever trades the bank performed with each counterparty, as is the case for the daily optimization.

This recursive process in combination with the choice of d, where $d = (nl - n2 + n3) / 3$ and the different objective function has the desired effect of minimizing the variance of each party's optimized position with each counterparty. For example, this process allows for the avoidance of undesirable concentrations of exposure to a particular counterparty. This technique results in few trades (one per distinct set of counterparties with large notionals).

It should be clear that the general description of a computer system provided above is by way of example only and should not be seen to limit implementation of credit derivative authority 102 to any particular computer architecture or implementation. Rather any architecture or implementation capable of implementing the processes and functionality described above can be used to implement the systems and methods described herein.

While certain embodiments of the inventions have been described above, it will be understood that the embodiments described are by way of example only. Accordingly, the inventions should not be limited based on the described embodiments. Rather, the scope of the inventions described herein should only be limited in light of the claims that follow when taken in conjunction with the above description and accompanying drawings.

**Claims**

1. A credit derivative trading platform comprising:

   a credit derivative authority that accepts orders from one or more market participants and executes trades between participants;
   one or more market participant systems for placing orders into the platform;
   one or more credit sponsors that provide credit to the one or more market participants on the platform.

2. The credit derivative trading platform of claim 1, further comprising one or more liquidity sponsors that provide a predetermined level of price support on the platform.

3. The credit derivative trading platform of claim 1, wherein the credit derivative authority is configured to create one or more single name credit default contracts.

4. The credit derivative trading platform of claim 1, wherein the platform supports market orders, limit orders, and market-to-limit orders.

5. The credit derivative trading platform of claim 1, wherein the platform supports iceberg orders.

6. The credit derivative trading platform of claim 1, wherein the credit derivative authority is configured to net trades between market participants.

7. The credit derivative trading platform of claim 1, wherein the credit derivative authority is configured to support fill or kill, immediate or cancel and minimum volume orders.

8. A method of transacting credit derivatives on an electronic trading platform comprising:

   matching orders between a first market participant and a second market participant on the platform;
   executing a trade between the first market participant and the second market participant; and
   automatically executing an agreement between the first market participant and a first credit sponsor involving credit for the executed trade.

9. The method of claim 8, further comprising executing an agreement between the second market participant and a second credit sponsor involving credit for the executed trade.

10. The method of claim 9, further comprising executing an agreement between the second credit sponsor and the second credit sponsor involving credit for the executed trade.

11. The method of claim 8, wherein the first market participant or second market participant is a liquidity sponsor that provides a predetermined level of price support on the platform.

12. The method of claim 8, wherein the matching orders include a market order a limit order, or a market-to-limit order.

**13.** The method of claim 8, wherein the matching orders include an iceberg order.

**14.** The method of claim 8, further comprising netting trades between market participants.

**15.** The method of claim 8, wherein the matching orders include a fill or kill, immediate or cancel, or minimum volume order.

**16.** A method of creating a single name credit default swap contract on an electronic trading platform comprising:

polling one or more market participants on the platform concerning the reference obligors;
choosing one or more of the polled reference obligors;
requesting that one or more market participants provide fixed coupons for each of the chosen reference obligors.

**17.** A method of creating and trading an index of credit default swap contracts on an electronic trading platform comprising:

creating an index of credit default swaps on the platform; and
trading the index on the platform.

EP 2 056 249 A1

Figure 1

## Figure 2

## Figure 3

| Lot Size |
|---|
| EUR 100,000 of notional |
| **Maturity** |
| 20th June, 2011 |
| **Reference Spread** |
| 40 bp pa |
| **Tick Size** |
| 0.25 bp pa |
| **Minimum / Default / Maximum Number of Lots** |
| 1 / 50 / 10,000 |
| **Maximum Bid-Offer Spread for Quotes** |
| 1 bp |
| **Reference Price Range / Opening Auction Price Range[1]** |
| ±10% / ±20% |
| **Trading Hours** |
| Pre-Trading: 7:00 am - 7:20 am<br>Opening Auction: 7:20 am - 7:30 am<br>Continuous Trading: 7:30 am - 5:00 pm<br>(all times are Monday to Friday, London Time) |
| **Ticker Symbol** |
| EU.S5.5 |

[1] This is the price range to trigger a volatility-interruption.

EP 2 056 249 A1

# Figure 4

| |
|---|
| **Reference Obligor** |
| France Telecom |
| **Asset Rank** |
| Senior |
| **Reference Obligation** |
| FR0000471948 (FRTEL 7 1/401 /13) |
| **Lot Size** |
| EUR 100,000 of notional |
| **Maturity** |
| 20th June 2011 |
| **Reference Spread** |
| 40 bp pa |
| **Tick Size** |
| 0.25 bp pa |
| **Minimum / Default / Maximum Number of Lots** |
| 1 / 50 / 10,000 |
| **Settlement** |
| |
| **Reference Price Range / Opening Auction Price Range** |
| ±4% / ±10% |
| **Trading Hours** |
| Pre-Trading: 7:00 am - 7:20 am<br>Opening Auction: 7:20 am - 7:30 am<br>Continuous Trading: 7:30 am - 5:00 pm<br>(all times are Monday to Friday, London Time) |
| **Ticker Symbol** |
| FT.M .5 (June maturity)<br>FT.Z .5 (December maturity) |

EP 2 056 249 A1

Figure 5

Figure 6

## Figure 7

Largest executable notional at lowest surplus found for

**Exactly One Limit** → Auction Price = Limit
Example 1

**Several Limits**

**Surplus**
- Only Demand Surplus → Auction Price set to highest limit
Example 2
- Only Supply Surplus → Auction Price set to lowest limit
Example 3
- Both Demand & Supply Surplus → Auction Price set to lowest limit with supply surplus, or highest limit with demand surplus, or Auction Price set to reference price
Example 4

**No Surplus** → Auction Price set to limit closest to reference price, or to reference price if indicative auction price between lowest and highest prices
Example 5

**No Limit**
- Only market orders in order book → Auction Price = Reference Price
Example 6
- No executable order in order book → No Auction Price Set
Example 7

EP 2 056 249 A1

Figure 8

Figure 9

Original Trade List

Perform Simple (Bilateral) Netting, to produce portfolio p.

Restart the iteration over the permutations of parties

Calculate "Cost", b of simple netted trades in p.

Create list of all possible permutations of 3 parties

For each permutation of 3 parties, p1, p2 and p3

Next permutation

Read the notionals (n1, n2 and n3) for each of the 3 trades (t1, t2, t3) from the current portfolio p

Are any 2 of n1, n2 and n3 non-zero?

No

Yes

Choose notional reduction amount v

For new notionals for t1, t2 and t3 as:
n1 = n1 – v
n2 = n2 + v
n3 = n3 - v

Calculate "Cost", c, of this new portfolio configuration

Reset notionals, n1, n2 and n3
n1 = n1 + v
n2 = n2 - v
n3 = n3 + v

Is new portfolio configuration feasible?

No

Yes

Set last feasible cost l <- c

Any more permutations of parties?

Yes

No

Did we make any successful reductions in cost?

Yes

No

END, portfolio is optimized.

The "cost" can be defined as a combination of the total number of trades and/or total gross notional + any penalties. The simple netted portfolio, by definition, produces a zero penalty cost

One possible permutation is formed by looping through each party in ascending order of some attribute of the party (such as name or some integer ID).

For 3 parties, p1, p2 and p3 we have 3 possible trades:
t1<-p1 with p2
t2<-p1 with p3
t3<-p2 with p3

v is chosen as:
v1 if |v1| <= |v2| and |v1| <= |v3|
-v2 if |v2| <= |v1| and |v2| <= |v3|
v3 if |v3| <= |v1| and |v3| <= |v2|
but, if v = 0 after this then choose v as the first non-negative of v1, -v2 and v3.

This procedure here automatically preserves the net position of all parties to the market

By definition our cost c must be better because of the prior notional reduction step

Whilst preserving net position to the market for each party we may have exceeded other constraints, such as:
- trade count for any party must not exceed that for the simple netted portfolio
- gross exposure for any party must not exceed that for the simple netted portfolio
- counterparty exposure limits
- also optionally we can penalize new trades

A portfolio is feasible if all constraints are satisfied.

Figure 10

Figure 11

EP 2 056 249 A1

Original Trade List

↓

Perform Simple (Bilateral) Netting, to produce portfolio p.

↓

Calculate "Cost", b of simple netted trades in p.

The "cost" can be defined as a combination of the total number of trades and/or total gross notional + any penalties. The simple netted portfolio, by definition, produces a zero penalty cost

↓

Create 8 possible lists of permutations of counterparties p1, p2 and p3

Each of the 8 lists of counterparty permutations are generated by progressing through each party (p1 to p3) in the ordering given in the table below

↓

For each of the 8 permutations

↓

Run Main Optimization Algorithm (1) and assign cost to c and netted trades to t

↓

Is cost of list c "better" than current best b?

No → Next list of counterparty permutations

Yes ↓

Assign c to b and netted trades t to p

↓

Final optimal portfolio is now in netted trades p with cost

→ END

| List | p1 | p2 | p3 |
|---|---|---|---|
| 1 | Ascending | Ascending | Ascending |
| 2 | Ascending | Ascending | Descending |
| 3 | Ascending | Descending | Ascending |
| 4 | Ascending | Descending | Descending |
| 5 | Descending | Ascending | Ascending |
| 6 | Descending | Ascending | Descending |
| 7 | Descending | Descending | Ascending |
| 8 | Descending | Descending | Descending |

EP 2 056 249 A1

Figure 12

# Figure 13

```
┌─────────────────────────────────────────────────────────────┐
│      Brokers trade between Counterparty A & Counterparty B     │
└─────────────────────────────────────────────────────────────┘
                              │
24                            ▼
┌─────────────────────────────────────────────────────────────┐
│         Trade data entered into Trade Processing System        │
└─────────────────────────────────────────────────────────────┘
                              │
                              ▼
┌─────────────────────────────────────────────────────────────┐
│     Counterparties A & B see their trade on their Client system │
└─────────────────────────────────────────────────────────────┘
                              │
32                           ▼
┌─────────────────────────────────────────────────────────────┐
│   Counterparties A & B both verify and authorize and allow trade for │
│              netting before cut-off time on T0                 │
└─────────────────────────────────────────────────────────────┘
                              │
                              ▼
┌─────────────────────────────────────────────────────────────┐
│   Netting System runs netting algorithm and produces netted trades │
└─────────────────────────────────────────────────────────────┘
                              │
                              ▼
┌─────────────────────────────────────────────────────────────┐
│        Netted trades sent to all Counterparty's Client systems │
└─────────────────────────────────────────────────────────────┘
                              │
                              ▼
┌─────────────────────────────────────────────────────────────┐
│  Netted trades are downloaded from Client system into Counterparty's │
│                        trading system                         │
└─────────────────────────────────────────────────────────────┘
```

Figure 14

| CT Trade ID | Dir. | Price (bps) | Notional (mm) | Acc. Int. | PV | Upfront Fee | Verified | Allow Net |
|---|---|---|---|---|---|---|---|---|
| CT48400 | Buy | 74.75 | 25 | 14,444.44 | (362,390.56) | (376,835.00) | | |
| CT48446 | Sell | 76.75 | 25 | (14,444.44) | 384,603.56 | 399,053.00 | | |
| **Ooo Bank (New York) (1 trades)** | | | (25) | (14,444) | 320,619 | 335,063 | | |
| CT48475 | Sell | 71 | 25 | (14,444.44) | 320,613.56 | 335,063.00 | Partial | |
| **Ppp Bank (New York) (1 trades)** | | | (50) | (28,889) | 719,010 | 747,899 | | |
| CT48375 | Sell | 74.5 | 50 | (28,888.89) | 719,010.11 | 747,899.00 | | ☑ |
| **Vvv Bank (-) (1 trades)** | | | 50 | 28,889 | (725,137) | (754,026) | | |
| CT48402 | Buy | 74.75 | 50 | 28,388.89 | (725,137.11) | (754,026.00) | Verified | ☑ |
| **Wvv Bank (Connecticut) (2 trades)** | | | 25 | 14,444 | (348,581) | (363,025) | | |
| CT48454 | Sell | 73.5 | 25 | (14,444.44) | 348,549.56 | 362,994.00 | | |
| CT48461 | Buy | 73.5 | 50 | 28,388.89 | (697,130.11) | (726,019.00) | | |

Netting — S4 IG4 5y — 26-Jul-05 — View — Trading limits — Chart — Reconciliation

Original Trades

Counterparty — Waiting on you / Waiting on Counterparty / Ready

|  | Original Trades | After Netting |
|---|---|---|
| Total Trades: | 12 | |
| Verified Trades: | 2 | |
| Nettable Trades: | 1 | |
| Wtd Av Buy Price: | 74.3 bps | |
| Wtd Av Sell Price: | 74.2 bps | |
| Gross Notional: | 375mm | |
| Net Notional: | (75mm) | |
| Gross Upfront | 5,572,161.00 | |
| Net Upfront: | 1,104,731.00 | |
| Net Acc. Int.: | (43,333.33) | |
| Net Pmt (PV): | 1,061,397.57 | |

**The netting process has not been run yet.**

EP 2 056 249 A1

Figure 15

| Netting | | | | | | | | | 🗐 _|□| X| |
|---|---|---|---|---|---|---|---|---|---|

| S4 IG4 5y ▼ | 10-May-05 ▼ | 🔍 View | | | | ⓘ Trading Limits  ∿ Chart   Update  ↻ Reconciliation |

**Original Trades**

| Counterparty ↗ | | | | | | | 🔲 Waiting on you | Waiting on Counterparty | Ready |
|---|---|---|---|---|---|---|---|---|---|

| CT Trade ID | Dir. | Price (bps) | Notional (mm) | Acc. Int | PV | Upfront Fee | Verified | Allow Net |
|---|---|---|---|---|---|---|---|---|
| Aaa Bank (London) (1 trades) | | | | (50) | (28,333) | 664,992 | 693,325 | |
| CT48336 | Sell | 72 | | 50 | (28,333.33) | 664,991.67 | 693,325.00 Verified | ☑ |
| Cec Bank (London) (1 trades) | | | | 50 | 28,333 | (619,948) | (648,281) | |
| CT48260 | Buy | 70 | | 50 | 28,333.33 | (619,947.67) | (648,281.00) Verified | ☑ |
| Ddd Bank (London) (2 trades) | | | | (10) | (5,667) | 115,057 | 120,724 | |
| CT48254 | Sell | 69.25 | | 35 | (19,833.33) | 422,241.67 | 442,075.00 Verified | ☑ |
| CT48258 | Buy | 69.75 | | 25 | 14,166.67 | (307,184.33) | (321,351.00) Verified | ☑ |
| Iii Bank (New York) (4 trades) | | | | 0 | 0 | (41,661) | (41,661) | |
| CT48179 | Sell | 67.75 | | 25 | (14,166.67) | 284,744.33 | 298,911.00 Verified | ☑ |
| CT48187 | Buy | 70 | | 25 | 14,166.67 | (309,843.33) | (324,010.00) Verified | ☑ |
| CT48247 | Sell | 69.5 | | 50 | (28,333.33) | 608,796.67 | 637,130.00 Verified | ☑ |

| **Netted Trades** | | | | | **Cash Flows** | | | |
|---|---|---|---|---|---|---|---|---|

| Counterparty ↗ | | | | | Counterparty ↗ | | | |
|---|---|---|---|---|---|---|---|---|
| CT Trade ID | Dir. | Notional (mm) | Acc. Int. | | CT Trade ID | Dir. | Pmt (PV) | |
| Hhh Bank (1 trades) | | (60) | (34,000) | | Aaa Bank (1 trades) | | 664,992 | |
| CT00000 | Sell | 60 | (34,000.00) | | CT00000 | Sell | 664,991.67 | |
| Jjj Bank (1 trades) | | 100 | 56,667 | | Cec Bank (1 trades) | | (619,948) | |
| CT00000 | Buy | 100 | 56,666.67 | | CT00000 | Buy | (619,947.67) | |
| | | | | | Ddd Bank (2 trades) | | 115,057 | |
| | | | | | CT00000 | Sell | 422,241.67 | |

| | Original Trades | After Netting |
|---|---|---|
| Total Trades: | 15 | 2 |
| Verified Trades: | 15 | |
| Nettable Trades: | 15 | |
| Wtd Av Buy Price: | 69.7 bps | |
| Wtd Av Sell Price: | 69.9 bps | |
| Gross Notional: | 710mm | 160mm |
| Net Notional: | 40mm | 40mm |
| Gross Upfront: | 9,134,645.00 | 9,134,645.00 |
| Net Upfront: | (476,413.00) | (475,413.00) |
| Net Acc. Int.: | 22,666.67 | 22,666.67 |
| Net Pmt (PV): | (453,746.33) | (453,746.33) |

# Figure 16

Europäisches
Patentamt

European
Patent Office

Office européen
des brevets

# EUROPEAN SEARCH REPORT

**Application Number**

EP 08 01 9107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, 1 November 2007 (2007-11-01), pages 592-593, XP007905525 ISSN: 0170-9291 The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required.<br><br>----- | 1-17 | INV. G06Q40/00 |

TECHNICAL FIELDS
SEARCHED       (IPC)

G06Q

The present search report has been drawn up for all claims

| Place of search | Date of completion of the search | Examiner |
|---|---|---|
| The Hague | 29 January 2009 | Bassanini, Anna |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

**EP 2 056 249 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030083978 A